# EUROPEAN PATENT APPLICATION

(11) **EP 1 051 902 A2**
(43) Date of publication of application: **15.11.2000**
(21) Application number: 00304021.9
(22) Date of filing: 12.05.2000
(51) Int. Cl.: A01G 9/02, A01G 27/02

(54) **Improved plant container**

(30) Priority: 13.05.1999 CN 99231627
(71) Applicant: Zheng, Qian Yuan, Guiyang, Guizhou (CN)
(72) Inventor: Zheng, Qian Yuan, Guiyang, Guizhou (CN)
(74) Representative: Bubb, Antony John Allen

(57) **Abstract**

A plant container comprising an outer layer (2) and an inner layer (3), having a reservoir (5) defined between the outer layer and the inner layer, characterised in that the reservoir is filled with fluid via a removably sealable opening (8,9) and the inner layer (3) having at least one hole (11) connecting to the reservoir (5).

## Description

The present invention relates to an improved plant container or " osmopot" for use in containing all types of plants, including shrubs and small trees, in both internal and external environments.

Conventionally, plant containers are provided with a saucer which sits underneath the base of the container to hold water, the plant in the container can then be watered by filling the saucer. However, there is no regulation of the amount of water which enters the growing medium around the roots of the plant and, due to the large surface area of water in the saucer, much of the water will be lost by evaporation. In order to increase the amount of water given to a plant at one time, conventionally, a larger saucer is used. However, the larger saucer will have a larger surface area of water and, accordingly, a higher rate of evaporation. Further, rates of evaporation of water from the saucer caused by environmental conditions will be highest when the plants need for water is highest.

Under and over watering of plants in conventional containers leads to stress of the plant. Further, many species of plants are particularly susceptible to over or under watering and this is a common cause for loss of potted plants. Accordingly, when using a conventional saucer it is often not desirable to fill the saucer to the top, since this will leave the roots of the plant standing in water which may cause the roots to rot, leading to loss of the plant. Therefore, it is necessary to water the plants little and often so they require constant care.

When using liquid fertilizers or pesticides, in a conventional container, these will be added to the water in the saucer leading to an increased risk of pollution and the risk of pets drinking from the saucer.

It is an object of the present invention to overcome the problems associated with plant containers in the past and to provide a plant container which retains water, without flooding the roots of the plant, and which, therefore, requires less frequent watering of the plant in the container.

It is a further object of the present invention to provide a plant container which is cheap and easy to produce.

It is a still further object of the present invention to provide a plant container which acts as a natural watering system that provides an even and consistent water supply to a plant potted in the container for indoor and outdoor environments.

According to the present invention there is provided a plant container comprising an outer layer and an inner layer, having a reservoir defined between the outer layer and the inner layer, characterised in that the reservoir is filled with fluid via a removably sealable opening and the inner layer having at least one hole connecting to the reservoir.

Preferably, the at least one hole in the inner layer is positioned at the lowest point of the inner layer. The base of the inner layer may be cone-shaped, the at least one hole being positioned at the central point of the cone-shape.

Again preferably, the removably sealable opening is positioned in the rim of the container.

The container may be of plastic or ceramic materials.

In order to aid in understanding the invention some specific embodiments thereof will now be described by way of example and with reference to the accompanying drawings, in which:

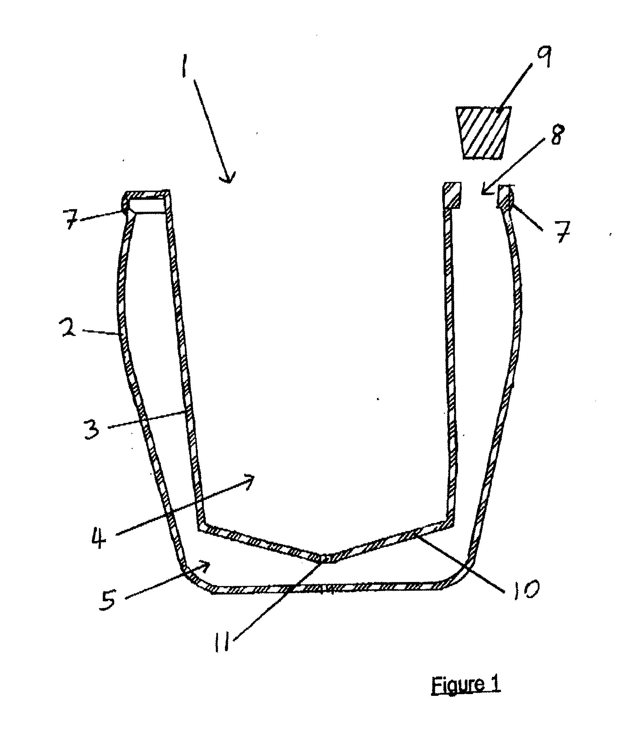

Figure 1 is a cross-sectional view showing a container according to the invention;

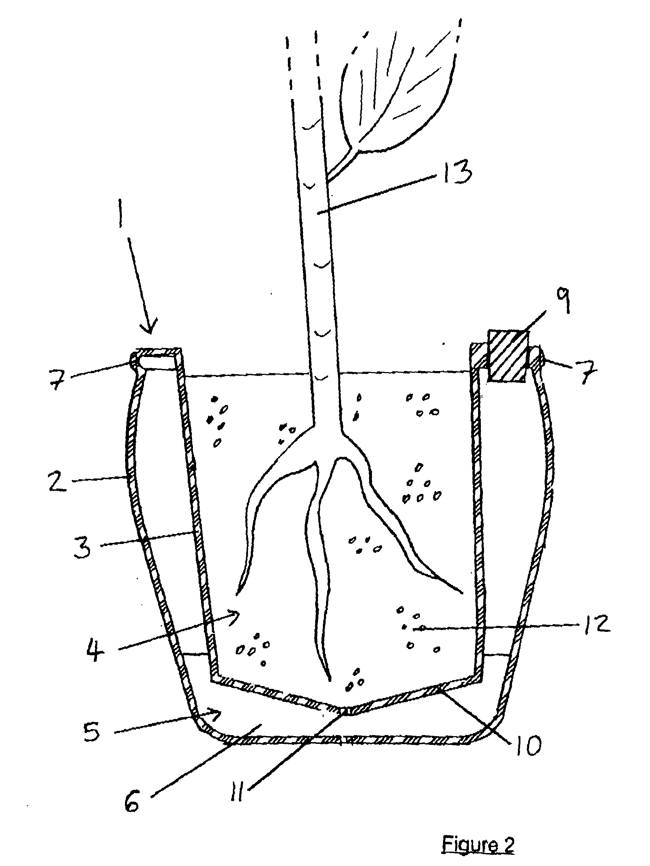

Figure 2 is a cross-sectional view showing the container of Figure 1 in use.

Referring to the Figures, there is shown a plant container or " osmopot" 1 comprising an outer layer 2 and an inner layer 3. The outer layer 2 defines the outer shape of the container 1 and, therefore, the aestnetic look of the container 1. The inner layer 3 defines an inner hollow 4. Between the outer layer 2 and the inner layer 3 is a space or reservoir 5 for the storage of fluid or water 6, with or without additional nutrients. A rim 7 of the container 1 has an opening or removably sealable opening 8 by which water 6 can be introduced into the reservoir 5. The rim 7 may be created by moulding the inner layer 3 and/or the outer layer 2 so that they join each other at or under the top surface of the rim 7, when the two layers 2 and 3 are joined together. Alternatively, a separate rim 7 may be used and fitted to the join the outer layer 2 and inner layer 3. The opening 8 can comprise a small hole in one area of the rim 7 and can obviously be of any suitable shape. Preferably the opening 8 is circular or oval and of a larger diameter than an average garden hose or watering can spout for ease of filling the reservoir 5. Alternatively, the opening 8 could be funnel-shaped for ease of filling, or the container 1 could be supplied with a funnel. Again alternatively, the opening 8 could run the full length or part of the length of the rim 7. The opening 8 has an airtight stopper 9 consisting of, for example, a bung of plastic, rubber, cork or wood, Alternatively, the stopper 9 is of moulded plastic fitted with a recessed " O" ring to form the seal with the opening 8. The stopper 9 may be attached to the container 1 by means of a plastic strip to prevent loss of the stopper 9 in use. The stopper 9 prevents loss of water 6 from the reservoir 5 by evaporation. The stopper 9 may also incorporate an indicator (not shown) to indicate the level of water 6 in the reservoir 5. The inner layer 3 has a cone-shaped base 10, at least one hole 11 is positioned at the central lowest point of the cone-shaped base 10. The hole 11 is small and allows water contact with soil or growing medium 12 in the inner hollow 4.

The container or " osmopot" 1 delivers water 6 to a plant 13 growing in the inner hollow 4 in two ways. The first is by capillary action, water molecules diffuse from a region of high concentration in the reservoir 5 to an area of low concentration in the inner hollow 4. Secondly, water 6 is also assisted to enter the inner hollow 4 from the reservoir 5 by fluctuations in the ambient temperature causing the air pressure in the reservoir above the water line to change. When the temperature rises the air pressure rises and the water 6 expands slightly and pushes a small amount of water 6 through the small hole 11. This wets the growing medium 12 and creates a capillary track in the inner hollow 4. As all living plants 13 are hydrotropi.c, their roots sense the presence of water in the soil 12 and eventually contact will be made with a capillary track and by the process of osmosis the plant will draw a supply of water throughout its membraneous cell structures.

The plant container or " osmopot" 1 according to the present invention may be made from a variety of materials, for example, ceramic materials, concrete materials, spun or cast metals, a variety of plastics and glass, or a mixture of any of the above materials.

In use, a plant 13, including a small tree or shrub, is planted conventionally in, for example, soil, growing medium, potting compost or water-carrying gel 12, in the inner hollow 4. The reservoir 5 is then filled with water or fluid 6 by means of the opening 8, liquid fertilizer can be added to the water 6. The stopper 9 is then placed in the opening 8 to seal the reservoir 5. The stopper 9 is designed to form an air lock or vacuum in the space or reservoir 5, failure to maintain the airtight seal of the stopper 9 may swamp the growing medium 12 in the inner hollow 4 with water 6 and, therefore, reduce the effectiveness of the watering system provided by the container or " osmopot" 1. The seal of the stopper 9 plus the small size of the hole 11 prevents water 6 flooding the growing medium 12 in the inner hollow 4. Provided the airtight seal of the stopper 9 is maintained, the water 6 stored in the reservoir 5 transfers naturally and slowly to the growing medium 12 and plant 13 in the inner hollow 4. The period of time between filling of the reservoir 5 will vary depending on the size of the container 1, the type of plant 13 and the external environment. Between four to six weeks is envisaged between refills.

A plant 13 planted in the container 1 according to the present invention will be able to draw water as and when required. There is no over wetting or under supply of moisture, The plant 13 through its root system and with the temperature induced fluctuating air pressure within the reservoir 5 is able to draw an even supply of water against the vacuum pressure within the reservoir 5.

The system of plant maintenance provided according to the container of the present invention allows the container 1 to be inverted without spillage of water 6 and any added nutrients. Further, as the water supply to the plant remains consistent, the plant is able to grow without the normal conditions for a potted plant of under and over supply of water cycles associated with conventional plant containers. The container 1 can be left for a number of weeks without resupply of water. To increase the period of time between refills an extra reservoir bottle (not shown) is filled and fitted or screwed into the opening 6. The reservoir 5 may be filled with, for example, foam or pebble-type porous materials, to add strength and rigidity to the container 1 while still acting as a reservoir 5 for water 6.

It will be understood that various alterations and modifications may be made to the above embodiments without departing from the scope of the invention, for example, the plant container according to the present invention can be of various shapes, such as, for example, square based and hexagonal based. Further the container can obviously be of different sizes and different proportions to sustain extended unattended plant growth. Also, the base 10 can be of various shapes, however, the cone-shape is preferable, allowing maximum storage capacity in the reservoir 5 with a low central point for optimum conditions to allow transfer of water 6 to the inner hollow 4 to occur even at low water levels in the reservoir 5. But, it can be foreseen that alternative shapes, such as an inverted cone having many holes around the outer edge of the base 10, or a dome-shaped base 10 may also be used. Also, the rim 7 may separately act as a removable sealable lid for the reservoir 5. Further, it can be foreseen that the opening 8 could be positioned in the side of the outer layer 2.

## Claims

1. A plant container comprising an outer layer and an inner layer, having a reservoir defined between the outer layer and the inner layer, characterised in that the reservoir is filled with fluid via a removably sealable opening and the inner layer having at least one hole connecting to the reservoir.

2. A plant container according to Claim 1, wherein the at least one hole in the inner layer is positioned at the lowest point of the inner layer.

3. A plant container according to Claim 1 or 2, wherein the base of the inner layer is cone-shaped, the at least one hole being positioned at the central point of the cone-shape,

4. A plant container according to any preceding claim, wherein the removably sealable opening is positioned in the rim of the container.

5. A plant container according to any preceding claim, wherein the container is of plastic or ceramic materials.

6. A plant container substantially as described herein with reference to the accompanying drawings.
